# EUROPÄISCHE PATENTSCHRIFT

(11) **EP 1 948 916 B1**
(45) Veröffentlichungstag und Bekanntmachung des Hinweises auf die Patenterteilung: **25.03.2009**
(21) Anmeldenummer: 06791758.3
(22) Anmeldetag: 31.08.2006
(51) Int. Cl.: F01N 3/28

(54) **ABGASREINIGUNGSVORRICHTUNG**
EXHAUST GAS PURIFICATION DEVICE
DISPOSITIF DE PURIFICATION DE GAZ D ÉCHAPPEMENT

(30) Priorität: 26.10.2005 DE 102005051261
(43) Veröffentlichungstag der Anmeldung: 30.07.2008
(73) Patentinhaber: EMCON Technologies Germany (Augsburg) GmbH, 86154 Augsburg (DE)
(72) Erfinder: SCHMIDT, Stefan, 86462 Langweid/Lech (DE); MERSCHKÖTTER, Stefan, 86152 Augsburg (DE); KRONER, Peter, 86482 Zweibrücken (DE); HOFGÄRTNER, Inge, 86641 Rain/Lech (DE)
(74) Vertreter: Prinz & Partner
(86) Internationale Anmeldenummer: PCT/EP2006/008517
(87) Internationale Veröffentlichungsnummer: WO 2007/048462

(56) Entgegenhaltungen:
- WO-A-01/42630
- DE-A1- 2 513 886
- DE-A1- 10 254 036
- DE-U1- 29 800 038

## Beschreibung

Die Erfindung betrifft eine Abgasreinigungsvorrichtung, mit wenigstens zwei in einem gemeinsamen Außengehäuse hintereinander angeordneten, abgasreinigenden Einlegern, die im Außengehäuse aufgrund unterschiedlich großen Haltekraftbedarfs am Umfang mit unterschiedlichen Haltekräften geklemmt sind.

Bei Abgasanlagen für Fahrzeuge werden immer bessere Abgasreinigungsvorrichtungen eingesetzt. Diese umfassen üblicherweise Einleger in Form von Substraten aus keramischem Material, die als mechanische Filter wirken, z.B. bei Partikelfiltern, oder die mit einem katalytischem Material beschichtet sind, um katalytisch das Abgas zu reinigen. Die Einleger sollen möglichst platzsparend untergebacht sein, zum Teil sollen sie auch strömungsmäßig sehr nahe aneinanderliegen, u.a. um geringere Wärmeverluste zwischen Katalysator und Filter zu haben. Aus diesem Grund werden Einleger in gemeinsamen Außengehäusen untergebracht, siehe z.B. DE 102 54 036 A1. Partikelfiltersubstrate, insbesondere aus SiC, sind im Vergleich zu Katalysatorsubstraten, insbesondere Dieseloxidationskatalysator-Substraten, sehr schwer, aber auch sehr robust. Die Dieseloxidationskatalysator-Substrate hingegen sind äußerst fragil und sehr leicht. Sie haben eine geringe Bruch- und Scherfestigkeit. Im Gegensatz zu den schweren, robusten Partikelfiltern darf auf die Katalysatoren nur eine sehr geringe radiale Klemmkraft ausgeübt werden, sonst werden sie deformiert und zerstört. Aufgrund ihres geringen Gewichts ist jedoch die geringe Klemmkraft auch ausreichend. Um die unterschiedlichen notwendigen und maximal möglichen Haltekräfte unterschiedlicher Einleger zu realisieren, werden die Gehäuse bisher in Strömungsrichtung mehrfach geteilt ausgeführt. Jeder Einleger wird in ein separates Gehäuseteil mit der nötigen Haltekraft eingebunden, und anschließend werden die Gehäuseteile zusammengeschweißt, gegebenenfalls unter Verwendung eines zwischen den Gehäuseteilen liegenden zylindrischen Ringes, an dessen entgegengesetzte Stirnseiten die Gehäuseteile angeschweißt werden. Alternativ werden auch Einleger in ein durchgehendes Rohr gesteckt und dieses auf unterschiedliche Durchmesser kalibriert.

Aufgabe der Erfindung ist es, eine einfach und kostengünstig herzustellende Abgasreinigungsvorrichtung zu schaffen, die mehrere abgasreinigende Einleger mit unterschiedlich großem Haltekraftbedarf enthält.

Dies wird bei einer Abgasreinigungsvorrichtung der eingangs genannten Art dadurch gelöst, daß sich das Außengehäuse in Strömungsrichtung ungeteilt über beide Einleger erstreckt und zumindest im Bereich der Einleger im wesentlichen gleiche Innenabmessungen, d.h. Querschnittsabmessungen, besitzt. Zwischen den Einlegern können auch Eindrückungen für Sensoren vorgesehen sein. Darüber hinaus ist zwischen jedem Einleger und dem Außengehäuse ein elastisches Ausgleichselement vorgesehen. Die Ausgleichselemente sind so unterschiedlich ausgeführt, daß sie unterschiedliche Haltekräfte auf die Einleger ausüben bzw. übertragen.

Die Erfindung geht weg von den bisherigen Außengehäusen, die mehrere in Strömungsrichtung hintereinander angeordnete, durch getrennte Teile hergestellte und anschließend miteinander verschweißte Gehäuseabschnitte vorsahen. Im Gegensatz hierzu bleibt das Gehäuse in Strömungsrichtung ungeteilt, d.h. es besteht aus einem oder mehreren von Beginn an durchgehenden Teil(en). Obwohl das Gehäuse in den Bereichen der Einleger im wesentlichen gleiche Innenabmessungen besitzt, werden unterschiedliche Halte- und Klemmkräfte auf die Einleger ausgeübt, indem man darauf abgestimmte, unterschiedliche Ausgleichselemente zwischenschaltet. Diese Ausgleichselemente sind üblicherweise sog. Lagermatten. Die verwendeten Lagermatten haben unterschiedliche Flächengewichte oder, anders ausgedrückt, unterschiedliche Elastizitäten, so daß bei gleicher Spaltbreite zwischen Innenseite des Außengehäuses und Außenseite der Einleger unterschiedliche Klemmkräfte auf die Einleger übertragen werden. Alternativ können Ausgleichselemente unterschiedlicher Art verwendet werden, die ebenfalls unterschiedlichen Druck aufbringen bzw. unterschiedliche Elastizität/Kompressibilität aufweisen. Das in einigen Ausführungsformen bei der Herstellung im Außendurchmesser verringerte Außengehäuse bleibt somit zylindrisch und neigt nicht dazu, sich zum labileren elastischen Element konisch zu verjüngen.

Wie bereits erwähnt ist der Einleger vorzugsweise ein Substrat, z.B. aus SiC (typisch für Dieselpartikelfilter), Cordierit (typisch für Dieseloxidationskatalysatoren) oder Titanoxid, Vanadiumoxid, Wolframoxid (typisch für SCR-Katalysatoren zur selektiven katalytischen Reduktion von Stickoxiden).

Das Außengehäuse und die Substrate sind gemäß der bevorzugten Ausführung zylindrisch, insbesondere kreiszylindrisch.

Die Substrate, dies ist bereits erwähnt worden, haben bevorzugt unterschiedliche Substratgewichte und/oder Bruchfestigkeiten.

Zur leichteren und einfacheren Herstellung ist vorgesehen, daß auch die Einleger im wesentlich gleiche Außenquerschnittsabmessungen und -geometrien haben, ebenso wie dies für die Innenseite des Gehäuses im Bereich der Einleger der Fall ist.

Es sind auch bevorzugt keine Zwischen- oder Stützwände zwischen den Einlegern vorgesehen, die den Druck auf den labileren Einleger teilweise aufnehmen könnten.

Die erfindungsgemäße Abgasreinigungsvorrichtung ist gemäß der bevorzugten Ausführung mit einem Wickelgehäuse als Außengehäuse ausgestattet. Gerade bei dieser Herstellung des Außengehäuses ist es bei unterschiedlich stabilen Einlegern schwierig, diese einerseits ausreichend zu klemmen und andererseits eine zylindrische Außengeometrie zu erzielen. Alternativ kann die erfindungsgemäße Abgasreinigungsvorrichtung mit einem Schalengehäuse oder einem auf geringere Außenabmessungen (z.B. durch Stauchen oder Rollieren) kalibrierten Gehäuse ausgeführt sein, oder mit einem vorgefertigten Rohr als Außengehäuse, in das die Einheiten aus Einleger und zugeordneten elastischen Ausgleichselementen gestopft werden.

Gemäß der bevorzugten Ausführungsform überbrückt das Ausgleichselement in radialer Richtung den gesamten Spalt zwischen der Innenseite des Außengehäuses und der Außenseite des Einlegers, d.h. es sind keine Zwischenteile oder dergleichen vorgesehen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch eine erfindungsgemäße Fahrzeug-Abgasreinigungsvorrichtung,
- Figur 2 eine schematische Querschnittsansicht durch die Abgasreinigungsvorrichtung nach Figur 1, wobei das Außengehäuse ein Wickelgehäuse ist,
- Figur 3 eine Querschnittsansicht durch die erfindungsgemäße Abgasreinigungsvorrichtung mit zwei Halbschalen als Außengehäuse,
- Figur 4 eine erfindungsgemäße Abgasreinigungsvorrichtung, bei der die Einleger gestopft werden, und
- Figur 5 eine Teilansicht einer Vorrichtung zum Kalibrieren des Außengehäuses einer erfindungsgemäßen Abgasreinigungsvorrichtung.

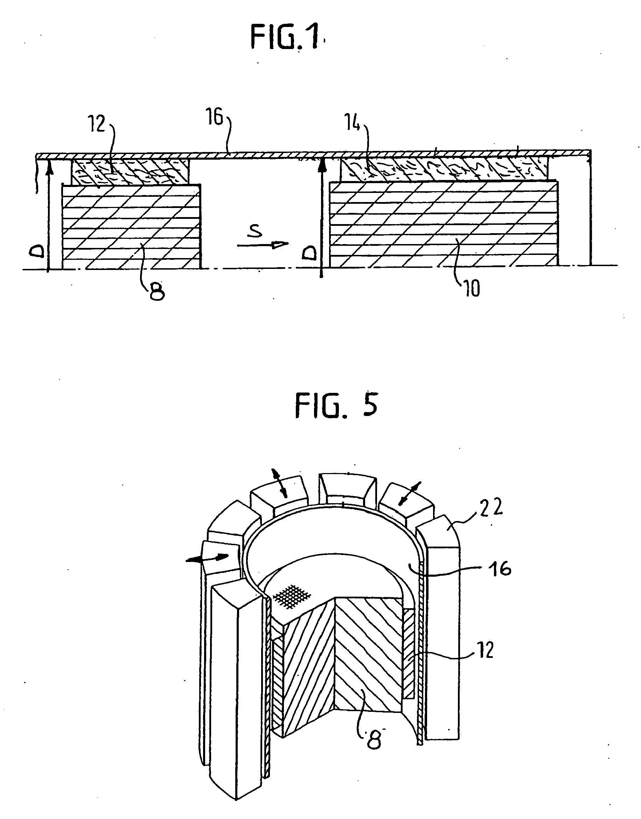

In Figur 1 ist eine im Kraftfahrzeug untergebrachte Abgasreinigungsvorrichtung dargestellt, deren Kernstück zwei langgestreckte, zylindrische (vorzugsweise kreiszylindrische), hintereinander angeordnete Einleger (keramische Substrate) in Form eine Katalysators 8 (hier eines Dieseloxidationskatalysators) und eines stromabwärtigen Partikelfilters 10 (hier in Form eines Dieselpartikelfilters) sind. Katalysator 8 und Partikelfilter 10 sind aus Cordierit bzw. SiC und haben stark unterschiedliche Gewichte und Bruchfestigkeiten. Der Katalysator 8 ist sehr leicht und besitzt eine sehr geringe Bruchfestigkeit im Vergleich zum schweren, stabilen Partikelfilter 10.

Katalysator 8 und Partikelfilter 10 haben im Rahmen ihrer Herstellungstoleranzen gleiche Außendurchmesser und Außenquerschnittsgeometrien und werden von eigenen, zugeordneten, elastischen Ausgleichselementen in Form von Lagermatten 12 bzw. 14 umfangsmäßig geschlossen umgeben. Die Lagermatten 12, 14 liegen außenseitig an dem Katalysator 8 bzw. dem Partikelfilter 10 an und füllen in radialer Richtung den gesamten Raum bis zur Innenseite eines gemeinsamen Außengehäuses 16 aus, an dem sie anliegen. Das Außengehäuse 16 ist in Strömungsrichtung S ungeteilt, d.h. es erstreckt sich beginnend vom Katalysator 8 aus bis über den Partikelfilter 10 hinaus und ist dabei in dieser Richtung ungeteilt, wie zuvor schon erläutert. Das Außengehäuse 16 hat im Bereich der beiden Einleger im Rahmen seiner Herstellungstoleranzen gleiche Innenquerschnittsabmessungen und -geometrien, vorliegen gleiche Innendurchmesser. Im Ausführungsbeispiel ist das Außengehäuse 16 sogar über seine gesamte Länge mit gleichem Innendurchmesser ausgeführt.

Aufgrund der unterschiedlichen Gewichte der Einleger und ihrer unterschiedlichen Bruchfestigkeiten werden sie mit unterschiedlichen radialen Haltekräften im Außengehäuse 16 geklemmt. Dies wird durch unterschiedliche Lagermatten 12, 14 erreicht. Die Lagermatte 12 hat nämlich ein geringeres Flächengewicht und/oder eine höhere Elastizität als die Lagermatte 14, wodurch die vom Außengehäuse 16 aufgebrachte radial einwärts wirkende Kraft aufgrund der leichteren Kompressibilität der Lagermatte 12 nur zu einem geringeren Teil auf den Katalysator 8 ausgeübt wird.

Es gibt verschiedene Ausführungsformen, wie das Außengehäuse 16 ausgeführt und wie die Substrate in dem Außengehäuse 16 geklemmt werden.

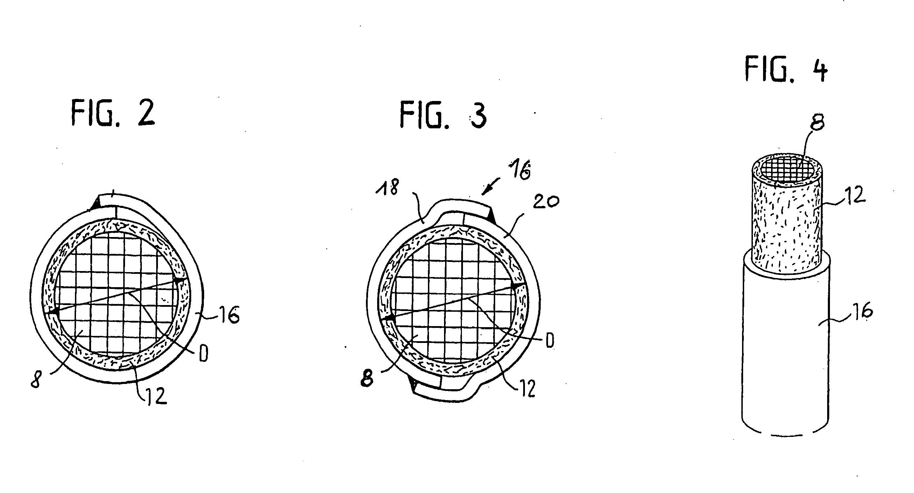

Die bevorzugte Ausführungsform ist das Wickeln gemäß Figur 2. Hier wird ein einziger Blechstreifen um die beiden Pakete aus Katalysator 8 und Lagermatte 12 einerseits und Partikelfilter 10 und Lagermatte 14 andererseits gewickelt und anschließend durch randseitiges Schweißen geschlossen. Der durch das Außengehäuse aufgebrachte Druck wird sehr gleichmäßig auf den Umfang verteilt, und das Außengehäuse 16 besitzt, bis auf den überlappenden Abschnitt, eine kreiszylindrische Form. Betont werden muß in diesem Zusammenhang natürlich, daß die Erfindung nicht auf kreiszylindrische Außengeometrien der Einleger beschränkt ist, sondern daß natürlich auch andere, beliebige Außengeometrien vorgesehen sein könnten. Die zylindrische Form wird durch den Radius D symbolisiert.

Bei der Ausführungsform nach Figur 3 besteht das Außengehäuse 16 aus zwei sich teilweise überlappenden Halbschalen 18, 20, die zusammengeführt und verschweißt werden. Beide Halbschalen erstrecken sich in Strömungsrichtung S ungeteilt, wie in Figur 1 dargestellt, über beide Einleger, so daß auch hier von einem in Strömungsrichtung S ungeteilten Gehäuse gesprochen wird. Die Teilung erfolgt hier vielmehr in Umfangsrichtung.

Bei der Ausführungsform nach Figur 4 ist das Außengehäuse 16 ein geschlossenes Rohr, in das z.B. von entgegengesetzten Stirnseiten aus Katalysator 8 samt Lagermatte 12 einerseits und Partikelfilter 10 mit zugeordneter Lagermatte 14 anderseits gestopft werden. Auch hier, wie bei den Ausführungsformen zuvor, werden unterschiedliche Haltekräfte auf die unterschiedlichen Einleger ausgeübt.

Bei der Ausführungsform nach Figur 5 wird das rohrförmige Außengehäuse 16 durch Stauchen oder Rollieren kalibriert, indem z.B. beim Stauchen Druckbacken 22 nach innen verfahren werden, um das Außengehäuse 16 auf der gesamten axialen Länge gleichmäßig zu verformen, die Lagermatten 12, 14 zu komprimieren und die Klemmkraft auf die Einleger auszuüben. Auch hier, wie bei den übrigen Ausführungsformen, sind die Außendurchmesser und die Außenquerschnittsgeometrien der Einleger sowie die Innenabmessungen und Innenquerschnittsgeometrien des Außengehäuses 16 (im Bereich der Einleger) gleich.

### Bezugszeichenliste

- 8:: Katalysator
- 10:: Partikelfilter
- 12:: Lagermatte
- 14:: Lagermatte
- 16:: Außengehäuse
- 18:: Halbschale
- 20:: Halbschale
- 22:: Druckbacken

## Patentansprüche

1. Abgasreinigungsvorrichtung, mit
wenigstens zwei in einem gemeinsamen Außengehäuse (16) hintereinander angeordneten, abgasreinigenden Einlegern,
die im Außengehäuse (16) aufgrund unterschiedlich großen Haltekraftbedarfs am Umfang mit unterschiedlichen Haltekräften geklemmt sind,
**dadurch gekennzeichnet,**
**daß** sich das Außengehäuse (16) in Strömungsrichtung (5) ungeteilt über beide Einleger erstreckt und zumindest im Bereich der Einleger im wesentlichen gleiche Innenabmessungen besitzt und
**daß** zwischen jedem Einleger und dem Außengehäuse (16) ein elastisches Ausgleichselement vorgesehen ist,
wobei die Ausgleichselemente so unterschiedlich ausgeführt sind, daß sie unterschiedliche Haltekräfte auf die Einleger ausüben.

2. Abgasreinigungsvorrichtung nach Anspruch 1, **dadurch gekennzeichnet, daß** die Einleger Substrate sind.

3. Abgasreinigungsvorrichtung nach Anspruch 2, **dadurch gekennzeichnet, daß** die Substrate unterschiedliche Substratgewichte und/oder Bruchfestigkeiten haben.

4. Abgasreinigungsvorrichtung nach einem der vorhergehenden Ansprüche, **dadurch gekennzeichnet, daß** ein Einleger ein Partikelfilter (10), insbesondere ein Dieselpartikelfilter ist.

5. Abgasreinigungsvorrichtung nach einem der vorhergehenden Ansprüche, **dadurch gekennzeichnet, daß** ein Einleger ein Katalysator (8), insbesondere ein DOC ist.

6. Abgasreinigungsvorrichtung nach einem der vorhergehenden Ansprüche, **dadurch gekennzeichnet, daß** das Außengehäuse (16) und die Einleger zylindrisch, insbesondere kreiszylindrisch sind.

7. Abgasreinigungsvorrichtung nach einem der vorhergehenden Ansprüche, **dadurch gekennzeichnet, daß** die elastischen Ausgleichselemente Lagermatten (12, 14) unterschiedlicher Kompressibilität sind.

8. Abgasreinigungsvorrichtung nach einem der vorhergehenden Ansprüche, **dadurch gekennzeichnet, daß** die elastischen Ausgleichselemente Lagermatten (12, 14) unterschiedlicher Flächengewichte sind.

9. Abgasreinigungsvorrichtung nach einem der vorhergehenden Ansprüche, **dadurch gekennzeichnet, daß** die Einleger im wesentlichen gleiche Querschnittsabmessungen und Querschnittsgeometrien haben.

10. Abgasreinigungsvorrichtung nach einem der vorhergehenden Ansprüche, **dadurch gekennzeichnet, daß** das Außengehäuse (16) ohne radiale Zwischenwand zwischen den Einlegern ausgeführt ist.

11. Abgasreinigungsvorrichtung nach einem der vorhergehenden Ansprüche, **dadurch gekennzeichnet, daß** das Außengehäuse (16) ein Wickelgehäuse ist.

12. Abgasreinigungsvorrichtung nach einem der Ansprüche 1 bis 10, **dadurch gekennzeichnet, daß** das Außengehäuse (16) auf geringere Außenabmessungen kalibriert oder als Schalengehäuse ausgeführt ist.

13. Abgasreinigungsvorrichtung nach einem der Ansprüche 1 bis 10, **dadurch gekennzeichnet, daß** die Einleger mit ihren Ausgleichselementen durch Stopfen in das Außengehäuse (16) eingeführt und darin geklemmt sind.

14. Abgasreinigungsvorrichtung nach einem der vorhergehenden Ansprüche, **dadurch gekennzeichnet, daß** die elastischen Ausgleichselemente innenseitig am Einleger und außenseitig am Außengehäuse (16) anliegen.

## Claims

1. An exhaust gas purification device, comprising
at least two exhaust gas purifying inserts which are arranged one after the other in a shared outer housing (16) and
are peripherally clamped in the outer housing (16) with different holding forces due to different amounts of holding forces required,
**characterized in that**
the outer housing (16) extends undivided over both inserts in the direction (S) of flow and has substantially equal internal dimensions at least in the region of the inserts, and
an elastic equalizing member is provided between each insert and the outer housing (16),
the equalizing members being of different configurations such that they exert different holding forces on the inserts.

2. The exhaust gas purification device according to claim 1, **characterized in that** the inserts are substrates.

3. The exhaust gas purification device according to claim 2, **characterized in that** the substrates have different substrate weights and/or breaking strengths.

4. The exhaust gas purification device according to any of the preceding claims, **characterized in that** one insert is a particulate filter (10), in particular a diesel particulate filter.

5. The exhaust gas purification device according to any of the preceding claims, **characterized in that** one insert is a catalytic converter (8), in particular a DOC.

6. The exhaust gas purification device according to any of the preceding claims, **characterized in that** the outer housing (16) and the inserts are cylindrical, in particular circular cylindrical.

7. The exhaust gas purification device according to any of the preceding claims, **characterized in that** the elastic equalizing members are support mats (12, 14) of different compressibilities.

8. The exhaust gas purification device according to any of the preceding claims, **characterized in that** the elastic equalizing members are support mats (12, 14) having different weights per unit area.

9. The exhaust gas purification device according to any of the preceding claims, **characterized in that** the inserts have substantially equal cross-sectional dimensions and cross-sectional geometries.

10. The exhaust gas purification device according to any of the preceding claims, **characterized in that** the outer housing (16) is configured without a radial intermediate wall between the inserts.

11. The exhaust gas purification device according to any of the preceding claims, **characterized in that** the outer housing (16) is a wrap-around housing.

12. The exhaust gas purification device according to any of claims 1 to 10, **characterized in that** the outer housing (16) is calibrated to smaller external dimensions or is in the form of a shell housing.

13. The exhaust gas purification device according to any of claims 1 to 10, **characterized in that** the inserts with their equalizing members are inserted in the outer housing (16) by stuffing and are clamped therein.

14. The exhaust gas purification device according to any of the preceding claims, **characterized in that** the elastic equalizing members rest against the insert on the inside and against the outer housing (16) on the outside.

## Revendications

1. Dispositif d'épuration des gaz d'échappement, comportant
au moins deux pièces d'insert d'épuration des gaz agencées les unes derrière les autres dans un boîtier extérieur (16) commun,
qui sont serrées à la périphérie dans le boîtier extérieur (16) avec différentes forces de retenue dues aux différents besoins en force de retenue,
**caractérisé en ce que**
le boîtier extérieur (16) s'étend en direction d'écoulement (S) sur les deux pièces d'insert, sans être divisé, et possède sensiblement les mêmes dimensions intérieures au moins dans la région des pièces d'insert, et
**en ce qu'**un élément de compensation élastique est prévu entre chaque pièce d'insert et le boîtier extérieur (16),
les éléments de compensation étant réalisés de manière si différente qu'ils exercent différentes forces de retenue sur les pièces d'insert.

2. Dispositif d'épuration des gaz d'échappement selon la revendication 1, **caractérisé en ce que** les pièces d'insert sont des substrats.

3. Dispositif d'épuration des gaz d'échappement selon la revendication 2, **caractérisé en ce que** les substrats ont différents poids de substrat et/ou différentes résistances à la rupture.

4. Dispositif d'épuration des gaz d'échappement selon l'une des revendications précédentes, **caractérisé en ce qu'**une pièce d'insert est un filtre à particules (10), en particulier un filtre à particules diesel.

5. Dispositif d'épuration des gaz d'échappement selon l'une des revendications précédentes, **caractérisé en ce qu'**une pièce d'insert est un catalyseur (8), en particulier un catalyseur d'oxydation de diesel.

6. Dispositif d'épuration des gaz d'échappement selon l'une des revendications précédentes, **caractérisé en ce que** le boîtier extérieur (16) et les pièces d'insert sont cylindriques, en particulier cylindriques circulaires.

7. Dispositif d'épuration des gaz d'échappement selon l'une des revendications précédentes, **caractérisé en ce que** les éléments de compensation élastiques sont des nattes de soutien (12, 14) de différente compressibilité.

8. Dispositif d'épuration des gaz d'échappement selon l'une des revendications précédentes, **caractérisé en ce que** les éléments de compensation élastiques sont des nattes de soutien (12, 14) de différent poids superficiel.

9. Dispositif d'épuration des gaz d'échappement selon l'une des revendications précédentes, **caractérisé en ce que** les pièces d'insert ont sensiblement les mêmes dimensions de section transversale et les mêmes géométries de section transversale.

10. Dispositif d'épuration des gaz d'échappement selon l'une des revendications précédentes, **caractérisé en ce que** le boîtier extérieur (16) est réalisé sans cloison intermédiaire radiale entre les pièces d'insert.

11. Dispositif d'épuration des gaz d'échappement selon l'une des revendications précédentes, **caractérisé en ce que** le boîtier extérieur (16) est un boîtier enroulé.

12. Dispositif d'épuration des gaz d'échappement selon l'une des revendications 1 à 10, **caractérisé en ce que** le boîtier extérieur (16) est calibré à des dimensions extérieures plus faibles ou réalisé sous forme de boîtier en forme de coque.

13. Dispositif d'épuration des gaz d'échappement selon l'une des revendications 1 à 10, **caractérisé en ce que** les pièces d'insert sont introduites avec leurs éléments de compensation par bourrage dans le boîtier extérieur (16).

14. Dispositif d'épuration des gaz d'échappement selon l'une des revendications précédentes, **caractérisé en ce que** les éléments de compensation élastiques sont en appui, côté intérieur, sur la pièce d'insert et, côté extérieur, sur le boîtier extérieur (16).
